# EUROPEAN PATENT APPLICATION

(11) **EP 4 648 228 A1**
(43) Date of publication of application: **12.11.2025**
(21) Application number: 23917286.9
(22) Date of filing: 15.12.2023
(51) Int. Cl.: H01Q 3/24, H01Q 21/00

(54) **FEED NETWORK, ANTENNA MODULE, AND DEVICE**

(30) Priority: 17.01.2023 CN 202310092136
(71) Applicant: Huawei Technologies Co., Ltd., Shenzhen, Guangdong 518129 (CN)
(72) Inventor: XUE, Tuanjie, Shenzhen, Guangdong 518129 (CN); ZHANG, Guanxi, Shenzhen, Guangdong 518129 (CN); YANG, Jing, Shenzhen, Guangdong 518129 (CN); TAO, Mingcui, Shenzhen, Guangdong 518129 (CN); LI, Xiaolai, Shenzhen, Guangdong 518129 (CN)
(74) Representative: Gill Jennings & Every LLP
(86) International application number: PCT/CN2023/139210
(87) International publication number: WO 2024/152819

(57) **Abstract**

This application discloses a feed network, an antenna module, and a device. The feed network includes a first radio frequency interface, a first selection unit, at least one allocation unit, at least one phase shift unit, and a plurality of antenna interfaces. The first selection unit is connected to the first radio frequency interface and the at least one allocation unit, and each allocation unit is connected to at least two antenna interfaces in the plurality of antenna interfaces through one phase shift unit. The first selection unit receives a first radio frequency signal from the first radio frequency interface, and transmits the first radio frequency signal to the at least one allocation unit. The phase shift unit adjusts an amplitude and a phase of the first radio frequency signal. The allocation unit allocates the adjusted signal to an antenna interface connected to the allocation unit. This application implements a hybrid beam forming network in a multi-connectivity state. Compared with a single-connectivity network architecture, a multi-connectivity network architecture has high antenna utilization, and achieves a narrow beam gain. In addition, because an amplitude and a phase of a radio frequency signal are adjusted, a dynamic network architecture can be implemented.

## Description

### CROSS-REFERENCE TO RELATED APPLICATIONS

This application claims priority to Chinese Patent Application No. 202310092136.9, filed with the China National Intellectual Property Administration on January 17, 2023 and entitled "FEED NETWORK, ANTENNA MODULE, AND DEVICE", which is incorporated herein by reference in its entirety.

### TECHNICAL FIELD

This application relates to the field of wireless communication technologies, and in particular, to a feed network, an antenna module, and a device.

### BACKGROUND

As a quantity of antennas continues to increase, a time-division duplexing (time-division duplexing, TDD) system is widely used in the field of wireless communication networks, so that degrees of freedom of antennas are significantly increased. To further save costs and the like, a quantity of radio frequency channels in a communication device is required not to increase. As a result, digital beam forming (digital beam forming, DBF) can no longer meet a requirement for continuous growth of network performance.

To make full use of advantages of an antenna aperture, increase a beam scanning range, improve user experience, and the like, digital beam forming and analog beam forming (analog beam forming, ABF) are jointly used to form hybrid beam forming (hybrid beam forming, HBF). HBF is one of important development trends of wireless communication. However, a single-connectivity network architecture is used in most of current HBF technologies. The architecture has very limited multi-user capacity improvement, and has low support for energy saving and emission reduction. However, a hybrid beam forming network in a multi-connectivity state has high antenna utilization, and can maintain an antenna aperture gain while implementing energy saving and emission reduction.

Therefore, how to construct the hybrid beam forming network in the multi-connectivity state is an urgent problem to be resolved currently.

### SUMMARY

This application provides a feed network, an antenna module, and a device, to resolve a problem of how to construct a hybrid beam forming network in a multi-connectivity state.

According to a first aspect, an embodiment of this application provides a feed network. The feed network includes a first radio frequency interface, a first selection unit, at least one allocation unit, at least one phase shift unit, and a plurality of antenna interfaces.

An input end of the first selection unit is connected to the first radio frequency interface, an output end of the first selection unit is connected to the at least one allocation unit, and each allocation unit is connected to at least two antenna interfaces in the plurality of antenna interfaces through one phase shift unit.

The first selection unit is configured to: receive a first radio frequency signal from the first radio frequency interface, and transmit the received first radio frequency signal to the at least one allocation unit.

The phase shift unit is configured to adjust an amplitude and a phase of the received first radio frequency signal.

The allocation unit is configured to allocate the adjusted first radio frequency signal to the antenna interface connected to the allocation unit.

Based on the foregoing technical solution, the feed network can select a radio frequency channel through a selection unit, then send a radio frequency signal to any quantity of antenna interfaces, and perform signal allocation through an allocation unit, to implement a hybrid beam forming network in a multi-connectivity state. In this way, antenna utilization is high, and on the premise that energy saving and emission reduction are implemented, an antenna aperture gain can be maintained and a plurality of communication services are taken into consideration. This significantly improves network performance.

In addition, because a phase shift unit is disposed to adjust the amplitude and the phase of the first radio frequency signal, a dynamic network architecture can be implemented.

In a possible implementation, the feed network further includes a second radio frequency interface. The input end of the first selection unit is connected to the second radio frequency interface.

The first selection unit is further configured to: receive a second radio frequency signal from the second radio frequency interface, and transmit the received second radio frequency signal to the at least one allocation unit.

The phase shift unit is further configured to adjust an amplitude and a phase of the received second radio frequency signal.

The allocation unit is further configured to allocate the adjusted second radio frequency signal to the antenna interface connected to the allocation unit.

Based on the foregoing technical solution, the feed network can process a plurality of radio frequency signals from different input ports, and the radio frequency signals may be from independent radio frequency ports. This further improves flexibility of a network architecture.

In a possible implementation, the feed network further includes a third radio frequency interface and a second selection unit.

An input end of the second selection unit is connected to the third radio frequency interface, and an output end of the second selection unit is connected to the input end of the first selection unit and the at least one allocation unit.

The second selection unit is configured to: receive a third radio frequency signal from the third radio frequency interface, and transmit the received third radio frequency signal to the first selection unit and/or the allocation unit connected to the second selection unit.

The phase shift unit is further configured to adjust an amplitude and a phase of the received third radio frequency signal.

The allocation unit is further configured to allocate the adjusted third radio frequency signal to the antenna interface connected to the allocation unit.

Based on the foregoing technical solution, the feed network can process a plurality of radio frequency signals from different input ports, and the radio frequency signals may be radio frequency signals input by other selection units. This further improves flexibility of a network architecture.

In a possible implementation, the first selection unit and/or the second selection unit are/is a crossover; or
the first selection unit and/or the second selection unit are/is a bridge.

Based on the foregoing technical solution, in a bridge mode of a crossover, a radio frequency signal input by the crossover may be output to each output port of the crossover, or a radio frequency signal input by a bridge may be output to each output port of the bridge by using a bridge device. In addition, in a straight-through mode of the crossover, the radio frequency signal input by the crossover may be output to a preset output port. This further improves flexibility of a network architecture.

In a possible implementation, the first selection unit includes a first power splitter and a first switch, an input end of the first power splitter is used as the input end of the first selection unit, a first output end of the first power splitter is connected to a first end of the first switch, and a second output end of the first power splitter and a second end of the first switch are used as output ends of the first selection unit; or
the first selection unit includes the first power splitter and two first switches, the input end of the first power splitter is used as the input end of the first selection unit, the first output end and the second output end of the first power splitter are respectively connected to first ends of the two first switches, and second ends of the two first switches are used as output ends of the first selection unit.

Based on the foregoing technical solution, a power splitter may split one input radio frequency signal into a plurality of signals, and a switch is further turned on or off to control a final signal flow direction. This further improves flexibility of a network architecture.

In a possible implementation, the second selection unit includes a second power splitter and a second switch, an input end of the second power splitter is used as the input end of the second selection unit, a first output end of the second power splitter is connected to a first end of the second switch, and a second output end of the second power splitter and a second end of the second switch are used as output ends of the second selection unit; or
the second selection unit includes the second power splitter and two second switches, the input end of the second power splitter is used as the input end of the second selection unit, the first output end and the second output end of the second power splitter are respectively connected to first ends of the two second switches, and second ends of the two second switches are used as output ends of the first selection unit.

In a possible implementation, the allocation unit is one of a bridge, a crossover, and a power splitter.

According to a second aspect, this application further provides an antenna module, used in the feed network according to the first aspect. The antenna module includes a plurality of antenna elements, each antenna element is connected to one antenna interface, and the antenna element includes at least one antenna subarray.

In a possible implementation, the antenna module further includes a plurality of third switches, and the third switch is connected between any two adjacent antenna elements.

Based on the foregoing technical solution, any quantity of antenna elements can receive a same radio frequency signal. Compared with a current design in which antenna elements are independent of each other, this solution further improves flexibility of a network architecture, and implements a multi-connectivity dynamic network architecture.

According to a third aspect, this application further provides an antenna device, including at least one feed network according to the first aspect and at least one antenna module according to the second aspect.

### BRIEF DESCRIPTION OF DRAWINGS

FIG. 1 is a diagram of a structure of an HBF network;
FIG. 2 is a diagram of a structure of a feed network according to an embodiment of this application;
FIG. 3 is a diagram of a structure of another feed network according to an embodiment of this application;
FIG. 4 is a diagram of a structure of another feed network according to an embodiment of this application;
FIG. 5a is a diagram of a structure of a first selection unit according to an embodiment of this application;
FIG. 5b is a diagram of a structure of another first selection unit according to an embodiment of this application;
FIG. 5c is a diagram of a structure of a second selection unit according to an embodiment of this application;
FIG. 5d is a diagram of a structure of another second selection unit according to an embodiment of this application;
FIG. 6 is a schematic of a topology of an architecture of a feed network according to an embodiment of this application;
FIG. 7 is a schematic of a topology of an architecture of another feed network according to an embodiment of this application;
FIG. 8 is a schematic of a topology of an architecture of another feed network according to an embodiment of this application;
FIG. 9 is a schematic of a topology of an architecture of another feed network according to an embodiment of this application;
FIG. 10 is a schematic of a topology of an architecture of another feed network according to an embodiment of this application;
FIG. 11 is a schematic of a topology of an architecture of another feed network according to an embodiment of this application;
FIG. 12 is a schematic of a topology of an architecture of another feed network according to an embodiment of this application;
FIG. 13 is a schematic of a topology of an architecture of another feed network according to an embodiment of this application;
FIG. 14 is a schematic of a topology of an architecture of another feed network according to an embodiment of this application;
FIG. 15 is a diagram of a structure of an antenna module according to an embodiment of this application;
FIG. 16 is a diagram of a structure of another antenna module according to an embodiment of this application;
FIG. 17 is a diagram of an architecture of an antenna network according to an embodiment of this application; and
FIG. 18 is a diagram of an architecture of another antenna network according to an embodiment of this application.

### DESCRIPTION OF EMBODIMENTS

To make the purpose, technical solutions, and advantages of this application clearer, the following clearly and completely describes the technical solutions of embodiments of this application with reference to the accompanying drawings in embodiments of this application.

For ease of understanding embodiments of this application, the following first explains and describes terms included in embodiments of this application.

### 1. Beam forming

Beam forming is a signal processing technology used in antenna and sensor arrays for directional transmission or reception, and is implemented by combining elements in the antenna array, where signals at specific angles experience correlated interference while other signals experience interference cancellation. Beam forming can be used in a transmit end and a receive end to implement spatial selectivity.

Currently, there are three beam forming technologies in 5G wireless networks: analog beam forming (analog beam forming, ABF), digital beam forming (digital beam forming, DBF), and hybrid beam forming (hybrid beam forming, HBF).

In analog beam forming, a same signal is fed to each antenna, and then a signal transmitted by an array is controlled by using an analog phase shifter, so that a beam is controlled by a series of phase shifters, to send a same signal from a plurality of antennas in different phases.

In digital beam forming, a different signal is designed for each antenna in a digital baseband and signals transmitted in spatial multiplexing are superposed, to provide separate directionality for each signal.

Hybrid beam forming combines digital beam forming and analog beam forming, that is, beam forming is jointly implemented by digital processing in the baseband and an analog radio frequency beamformer.

### 2. Antenna aperture gain

An antenna aperture is a physical area occupied by the deployed antenna elements, and the antenna aperture gain is a beam gain formed by antenna elements included in the antenna aperture.

Time-division duplexing (time-division duplexing, TDD) is a duplex mode of a communication system, and is used to separate a receiving channel and a transport channel in a mobile communication system. In a mobile communication system in a TDD mode, receiving and transporting are based on a same frequency channel, namely, different slots of a carrier; and a receiving channel and a transport channel are separated from each other based on guaranteed time. In the mobile communication system in the TDD mode, a same frequency is used for an uplink channel and a downlink channel, to provide reciprocity between the uplink channel and the downlink channel. In the TDD mode, transmission of information in an uplink and a downlink may be performed at a same carrier frequency, that is, transmission of the information in the uplink and the downlink is implemented through time division on a same carrier.

As a quantity of antennas continues to increase, a time-division duplexing system is widely used in the field of wireless communication networks, so that degrees of freedom of antennas are significantly increased. To make full use of advantages of an antenna aperture, increase a beam scanning range, improve user experience, and the like, digital beam forming and analog beam forming are jointly used to form hybrid beam forming HBF. HBF is one of important development trends of wireless communication.

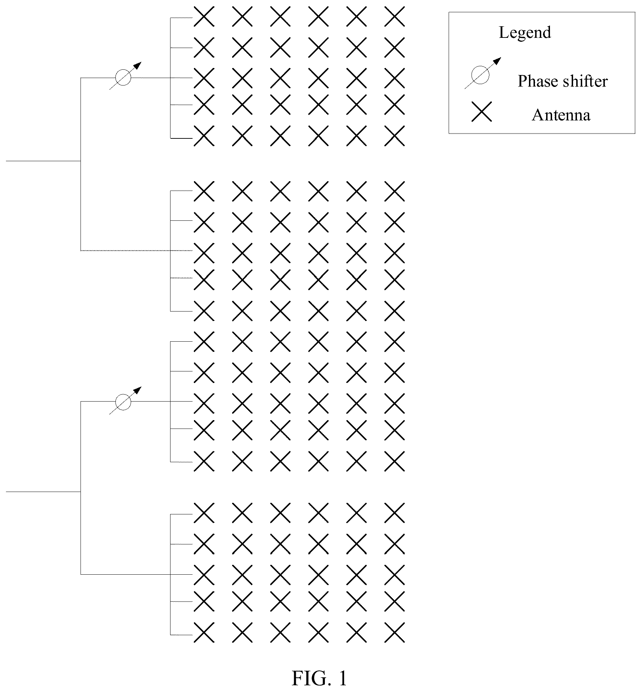

However, most of current HBF technologies are single-connectivity network architectures. FIG. 1 shows an architecture of a conventional HBF network. As shown in FIG. 1, the HBF network is mainly implemented in a vertical direction. For each column of single-polarized antennas, four 1-to-5 antennas are vertically disposed, two antenna subarrays on an upper half of an antenna aperture are connected to one phase shifter through a 1-to-2 power splitter to form an HBF network, and similarly, two antenna subarrays on a lower half of the antenna aperture are connected to one phase shifter through a 1-to-2 power splitter to form an HBF network. Further, an analog beam can be scanned by adjusting the phase shifter, and digital-to-analog beam scanning is implemented by combining a baseband weight.

To further save costs and the like, a quantity of radio frequency channels in a communication device is required not to increase. However, the conventional HBF network architecture has very limited improvement in a multi-user capacity, cannot adjust a beam forming capability based on a service load, and has a single function. In addition, although the architecture of the conventional HBF network can implement digital-analog beam scanning, it cannot significantly improve multi-beam multi-user performance, has a large loss of an antenna aperture gain, and has low support for energy saving and emission reduction.

Therefore, how to construct a hybrid beam forming network in a multi-connectivity state is an urgent problem to be resolved currently.

Based on the foregoing problem, embodiments of this application provide a feed network, an antenna module, and a device, to resolve a problem of how to construct the hybrid beam forming network in the multi-connectivity state.

The following describes, with reference to the described application scenarios and the accompanying drawings, a feed network provided in an example implementation of this application. It should be noted that the foregoing application scenario is merely shown for ease of understanding a principle of this application, and an implementation of this application is not limited in this aspect. For example, this application is not limited to time-division duplexing communication, and may be further used in a communication manner such as frequency-division duplexing communication.

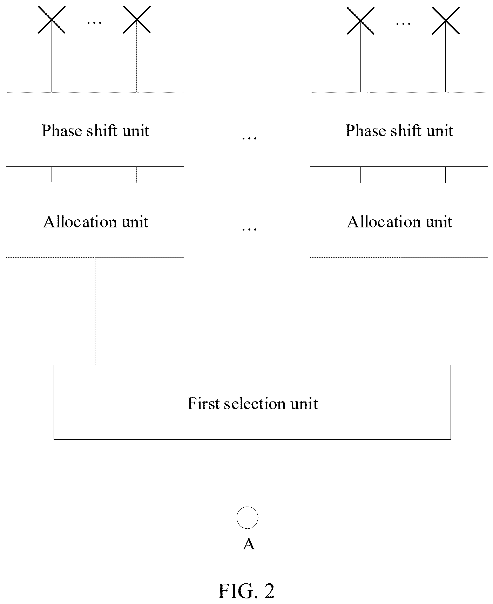

FIG. 2 is a diagram of a structure of a feed network according to an embodiment of this application. As shown in FIG. 2, the feed network includes a first radio frequency interface (shown as an interface A in FIG. 2), a first selection unit, at least one allocation unit, at least one phase shift unit, and a plurality of antenna interfaces.

An input end of the first selection unit is connected to the first radio frequency interface, an output end of the first selection unit is connected to the at least one allocation unit, and each allocation unit is connected to at least two antenna interfaces in the plurality of antenna interfaces through one phase shift unit.

The first selection unit is configured to: receive a first radio frequency signal from the first radio frequency interface, and transmit the received first radio frequency signal to the at least one allocation unit.

The phase shift unit is configured to adjust an amplitude and a phase of the received first radio frequency signal.

The allocation unit is configured to allocate the adjusted first radio frequency signal to the antenna interface connected to the allocation unit.

**In** this embodiment of this application, the feed network may select a radio frequency channel through the selection unit, then send a radio frequency signal to any quantity of antenna interfaces, and perform signal allocation through the allocation unit, to implement a hybrid beam forming network in a multi-connectivity state.

Compared with single connectivity, in multi-connectivity, at least one radio frequency channel is connected to all antennas in each subarray, so that antenna utilization is high, and a narrow beam gain can be implemented. This resolves a problem that an antenna aperture gain decreases after a power amplifier between a radio frequency interface and a baseband is turned off.

In addition, the phase shift unit in this embodiment of this application may include at least one phase shifter. Because the phase shift unit is disposed to adjust the phase and the amplitude of the first radio frequency signal, a dynamic network architecture can be implemented.

In addition, in this technical solution, switching to a single-connectivity state may give consideration to a plurality of communication services, resolve a problem that a network architecture cannot be adjusted based on a service load, mainly improve single-user coverage performance in a wireless network or improve user experience in a low-load scenario, and significantly improves network performance. A multi-connectivity state may simultaneously implement a plurality of narrow beams or support a multi-carrier function. The state is applied to a case in which a user load is high, to relieve network pressure and improve network capacity performance.

Based on the architecture of the feed network shown in FIG. 2, the feed network can further process a plurality of radio frequency signals from different input ports, and the radio frequency signals may be from other radio frequency ports. This further improves flexibility of the network architecture.

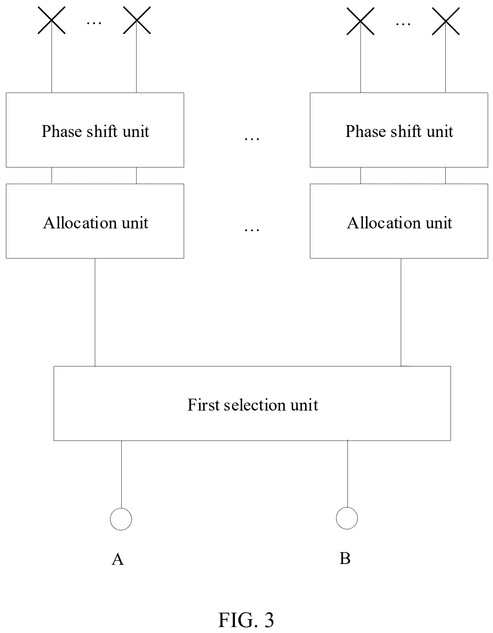

As shown in FIG. 3, the feed network further includes a second radio frequency interface (shown as an interface B in FIG. 3), and the input end of the first selection unit is connected to the second radio frequency interface.

The first selection unit is further configured to: receive a second radio frequency signal from the second radio frequency interface, and transmit the received second radio frequency signal to the at least one allocation unit.

The phase shift unit is further configured to adjust an amplitude and a phase of the received second radio frequency signal.

The allocation unit is further configured to allocate the adjusted second radio frequency signal to the antenna interface connected to the allocation unit.

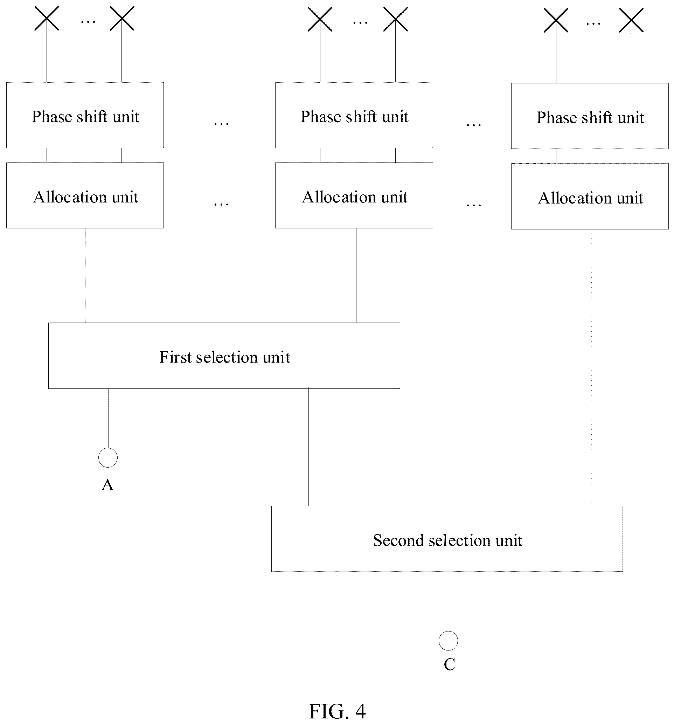

Based on the architecture of the feed network shown in FIG. 2, as shown in FIG. 4, the feed network further includes a third radio frequency interface (shown as an interface C in FIG. 4) and a second selection unit.

An input end of the second selection unit is connected to the third radio frequency interface, and an output end of the second selection unit is connected to the input end of the first selection unit and the at least one allocation unit.

The second selection unit is configured to: receive a third radio frequency signal from the third radio frequency interface, and transmit the received third radio frequency signal to the first selection unit and/or the allocation unit connected to the second selection unit.

The phase shift unit is further configured to adjust an amplitude and a phase of the received third radio frequency signal.

The allocation unit is further configured to allocate the adjusted third radio frequency signal to the antenna interface connected to the allocation unit.

In a possible implementation, the first selection unit and/or the second selection unit in this technical solution may be a crossover; or
the first selection unit and/or the second selection unit are/is a bridge.

In a bridge mode of a crossover, a radio frequency signal input by the crossover may be output to each output port of the crossover, or a radio frequency signal input by a bridge may be output to each output port of the bridge by using a bridge device. In addition, in a straight-through mode of the crossover, the radio frequency signal input by the crossover may be output to a preset output port. This further improves flexibility of a network architecture.

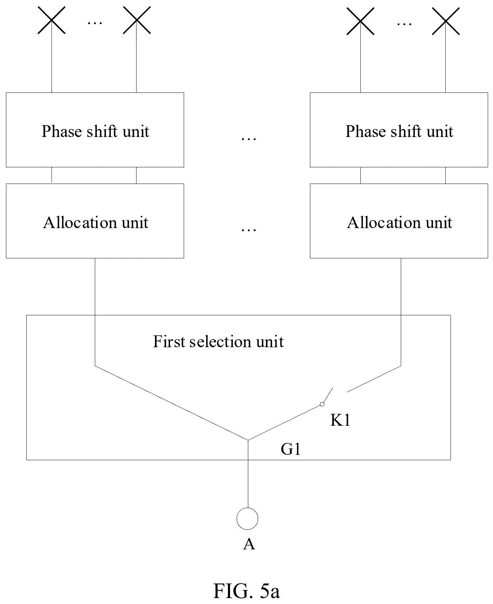

In a possible implementation, with reference to the basic structure of the feed network shown in FIG. 2, as shown in FIG. 5a, the first selection unit may include a first power splitter G1 and a first switch, an input end of the first power splitter G1 is used as the input end of the first selection unit, a first output end of the first power splitter G1 is connected to a first end of the first switch K1, and a second output end of the first power splitter G1 and a second end of the first switch K1 are used as output ends of the first selection unit.

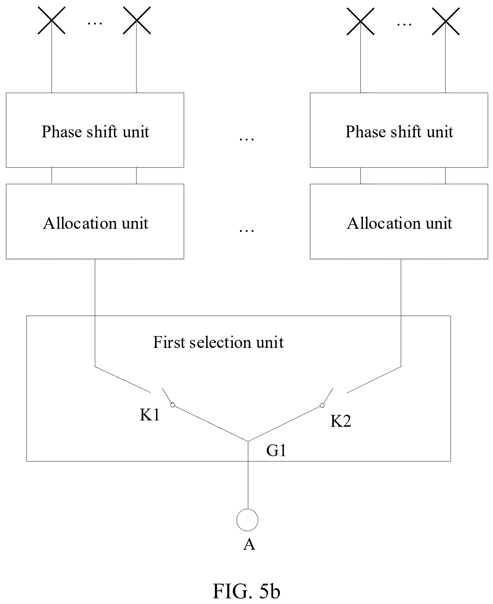

Alternatively, as shown in FIG. 5b, the first selection unit includes the first power splitter G1 and two first switches K1 and K2, an input end of the first power splitter G1 is used as the input end of the first selection unit, a first output end and a second output end of the first power splitter G1 are respectively connected to first ends of the two first switches K1 and K2, and second ends of the two first switches K1 and K2 are used as output ends of the first selection unit.

Based on the foregoing technical solution, a power splitter may split one input radio frequency signal into a plurality of signals, and a switch is further turned on or off to control a final signal flow direction. This further improves flexibility of a network architecture.

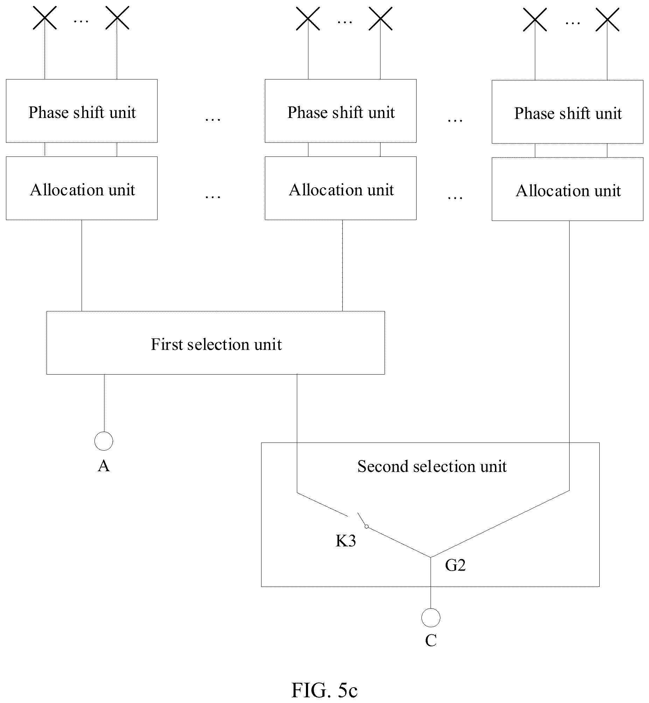

Similarly, with reference to the basic structure of the feed network shown in FIG. 4, as shown in FIG. 5c, the second selection unit may include a second power splitter G2 and a second switch K3, an input end of the second power splitter G2 is used as the input end of the second selection unit, a first output end of the second power splitter G2 is connected to a first end of the second switch K3, and a second output end of the second power splitter G2 and a second end of the second switch K3 are used as output ends of the second selection unit.

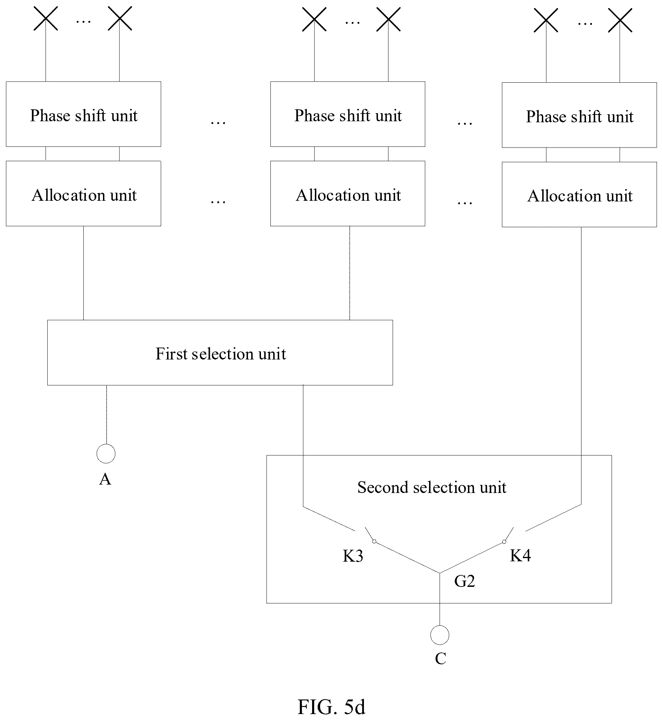

Alternatively, as shown in FIG. 5d, the second selection unit includes the second power splitter G2 and two second switches K3 and K4, an input end of the second power splitter G2 is used as the input end of the second selection unit, a first output end and a second output end of the second power splitter G2 are respectively connected to first ends of the two second switches K3 and K4, and second ends of the two second switches K3 and K4 are used as output ends of the first selection unit.

In a possible implementation, the allocation unit in this technical solution may be any one of a bridge, a crossover, and a power splitter.

In this embodiment of this application, a power ratio of the bridge may be flexibly set based on a requirement, for example, may be set to 2:1 or 1:1. In this embodiment of this application, an example in which the power ratio of the bridge is 1:1 is used for description. That the power ratio of the bridge in this embodiment of this application is 1:1 may be understood as that for a signal input by one input port of the bridge, a power ratio of signals output by two output ports is 1:1. If the bridge is a 90-degree bridge, when a power ratio of signals input by the two input ports of the bridge is 1:1, and the signals input by the two input ports have a phase difference of 90 degrees, power of the signals input by the two input ports of the bridge may be concentrated on a signal output by one radio frequency port.

Similarly, in this embodiment of this application, a power ratio of the crossover may be flexibly set based on a requirement, for example, may be set to 2:1 or 1:1. In this embodiment of this application, an example in which the power ratio of the bridge is 1:1 is used for description. That the power ratio of the crossover in this embodiment of this application is 1:1 may be understood as that for a signal input by one input port of the crossover, a power ratio of signals output by two output ports is 1:1.

In addition, a location of the phase shifter in this embodiment of this application may be flexibly arranged based on a requirement. The location of the phase shifter in this embodiment of this application is merely an example.

The following describes the foregoing feed network in detail with reference to embodiments.

### Embodiment 1

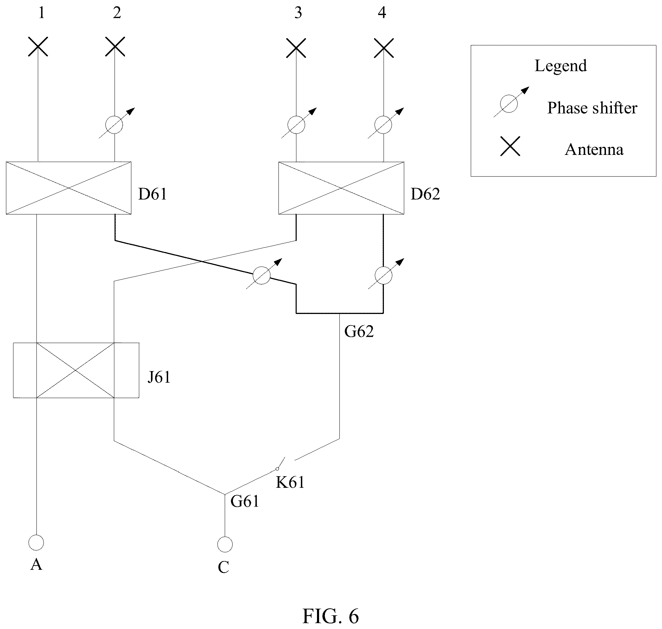

FIG. 6 is a schematic of a topology of an architecture of a feed network according to an embodiment of this application. As shown in FIG. 6, the architecture of the feed network includes a bridge D61, a bridge D62, a power splitter G61, a power splitter G62, a switch K61, a crossover J61, and a plurality of phase shifters. A radio frequency interface A is connected to the crossover J61. A radio frequency interface C is connected to an input end of the power splitter G61. Output ends of the power splitter G61 are respectively connected to the crossover J61 and the switch K61. The switch K61 is connected to an input end of the power splitter G62. Output ends of the power splitter G62 are respectively connected to the bridge D61 and the bridge D62 through phase shifters. One output end of the bridge D61 is connected to an antenna interface 1, and no phase shifter is disposed between the output end and the antenna interface. A phase of a signal output through the output end is used as a reference phase. The other output end of the bridge D61 is connected to an antenna interface 2 through a phase shifter. Two output ends of the bridge D62 are connected to an antenna interface 3 and an antenna interface 4 through phase shifters.

When the switch K61 is turned off, a radio frequency signal output by the radio frequency interface C cannot flow to the power splitter G62 through the power splitter G61, but flows to the crossover J61. Further, if the crossover J61 is switched to a straight-through mode, a radio frequency signal from the radio frequency interface A flows to the bridge D61, and a radio frequency signal from the power splitter G61 flows to the bridge D62.

In this case, a radio frequency channel of the radio frequency interface A can be connected to only the antenna interface 1 and the antenna interface 2, and a radio frequency channel of the radio frequency interface C can be connected to only the antenna interface 3 and the antenna interface 4. Therefore, the network architecture is a single-connectivity dynamic network.

When the switch K61 is turned on, a radio frequency signal output by the radio frequency interface C flows to the power splitter G62 through the power splitter G61 and flows to the crossover J61. Further, if the crossover J61 is switched to a bridge mode, a radio frequency signal from the radio frequency interface A flows to the bridge D61 and the bridge D62, and a radio frequency signal from the power splitter G61 flows to the bridge D61 and the bridge D62.

In this case, a radio frequency channel of the radio frequency interface A may be connected to the antenna interfaces 1 to 4, and a radio frequency channel of the radio frequency interface C may be connected to the antenna interfaces 1 to 4. Therefore, the network architecture is a multi-connectivity dynamic network. When the feed network works in a multi-connectivity state, one of the radio frequency interfaces A and C does not send a signal, the other sends a signal, and a signal channel of the radio frequency interface that sends a signal may be connected to the antenna interfaces 1 to 4, to implement beam forming for a maximum of antennas and implement an energy saving state.

It should be understood that, in the network architecture provided in this technical solution, turn-on and turn-off of a switching device and a straight-through mode or a bridge mode of a crossover may be controlled to form another signal channel, to implement a single-connectivity or multi-connectivity dynamic network architecture.

### Embodiment 2

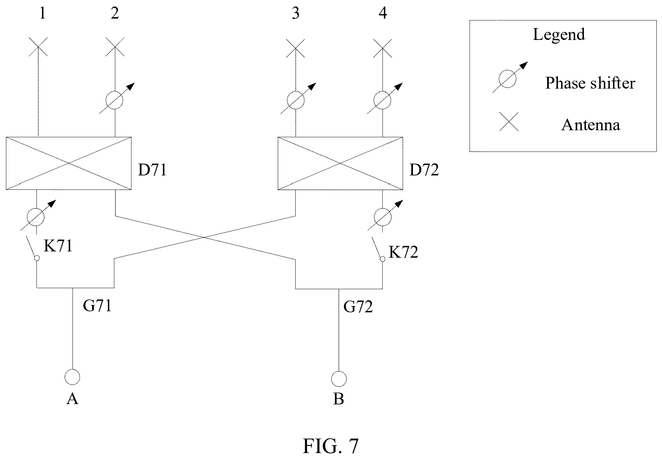

FIG. 7 is a schematic of a topology of an architecture of another feed network according to an embodiment of this application. As shown in FIG. 7, the architecture of the feed network includes a bridge D71, a bridge D72, a power splitter G71, a power splitter G72, a switch K71, a switch K72, and a plurality of phase shifters. A radio frequency interface A is connected to the power splitter G71. A radio frequency interface B is connected to an input end of the power splitter G72. Output ends of the power splitter G71 are respectively connected to the bridge D72 and the switch K71. Output ends of the power splitter G72 are respectively connected to the bridge D71 and the switch K72. The switch K71 is connected to the bridge D71 through a phase shifter. The switch K72 is connected to the bridge D72 through a phase shifter. One output end of the bridge D71 is directly connected to an antenna interface 1, and no phase shifter is disposed between the output end and the antenna interface. A phase of a signal output through the output end is used as a reference phase. The other output end of the bridge D71 is connected to an antenna interface 2 through a phase shifter. Two output ends of the bridge D72 are connected to an antenna interface 3 and an antenna interface 4 through phase shifters.

When the switch K71 and the switch K72 are turned off, a radio frequency signal output by the radio frequency interface A cannot flow to the bridge D71 through the power splitter G71, but flows to the bridge D72, and a radio frequency signal output by the radio frequency interface B cannot flow to the bridge D72 through the power splitter G72, but flows to the bridge D71.

In this case, a radio frequency channel of the radio frequency interface A can be connected to only the antenna interface 3 and the antenna interface 4, and a radio frequency channel of the radio frequency interface B can be connected to only the antenna interface 1 and the antenna interface 2. Therefore, the network architecture is a single-connectivity dynamic network.

When the switch K71 and the switch K72 are turned on, a radio frequency signal output by the radio frequency interface A flows to the bridge D71 through the power splitter G71 and flows to the bridge D72, and a radio frequency signal output by the radio frequency interface B flows to the bridge D71 and the bridge D72 through the power splitter G72.

In this case, a radio frequency channel of the radio frequency interface A may be connected to the antenna interfaces 1 to 4, and a radio frequency channel of the radio frequency interface B may be connected to the antenna interfaces 1 to 4. Therefore, the network architecture is a multi-connectivity dynamic network. When the feed network works in a multi-connectivity state, one of the radio frequency interfaces A and B does not send a signal, the other sends a signal, and a signal channel of the radio frequency interface that sends a signal may be connected to the antenna interfaces 1 to 4, to implement beam forming for a maximum of antennas and implement an energy saving state.

It should be understood that, in the network architecture provided in this technical solution, turn-on and turn-off of a switching device may be controlled to form another signal channel, to implement a single-connectivity or multi-connectivity dynamic network architecture.

### Embodiment 3

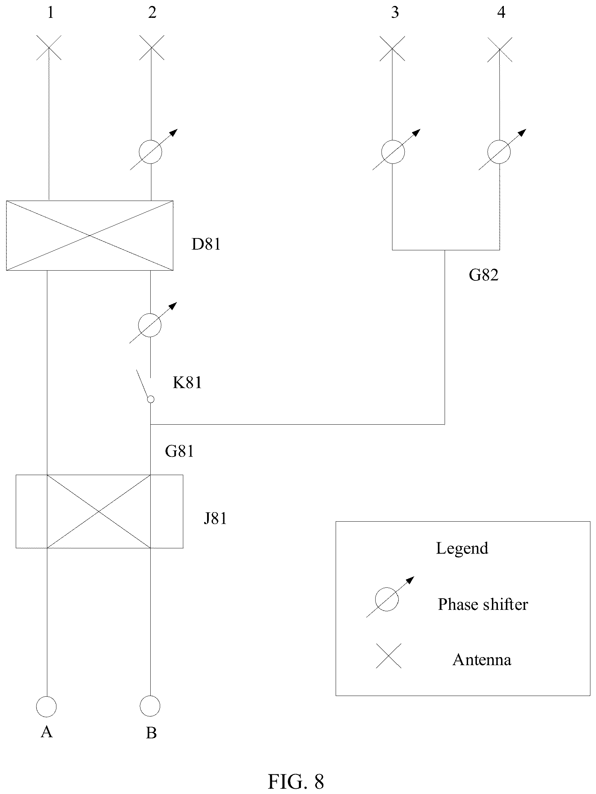

FIG. 8 is a schematic of a topology of an architecture of another feed network according to an embodiment of this application. As shown in FIG. 8, the architecture of the feed network includes a bridge D81, a power splitter G81, a power splitter G82, a switch K81, a crossover J81, and a plurality of phase shifters. A radio frequency interface A and a radio frequency interface B are respectively connected to input ends of the crossover J81. Output ends of the crossover J81 are respectively connected to the bridge D81 and the power splitter G81. One output end of the power splitter G81 is connected to the switch K81, and the other output end of the power splitter G81 is connected to the power splitter G82. The switch K81 is connected to an input end of the bridge D81 through a phase shifter. Two output ends of the power splitter G82 are respectively connected to the antenna interface 3 and the antenna interface 4 through phase shifters. One output end of the bridge D81 is connected to an antenna interface 1, and no phase shifter is disposed between the output end and the antenna interface. A phase of a signal output through the output end is used as a reference phase. The other output end of the bridge D81 is connected to an antenna interface 2 through a phase shifter.

When the crossover J81 is switched to a straight-through mode and the switch K81 is turned off, a radio frequency signal output by the radio frequency interface A cannot flow to the power splitter G81, but directly flows to the bridge D81, and a radio frequency signal output by the radio frequency interface B cannot flow to the bridge D81 through the power splitter G81, but flows to the power splitter G82.

In this case, a radio frequency channel of the radio frequency interface A can be connected to only the antenna interface 1 and the antenna interface 2, and a radio frequency channel of the radio frequency interface B can be connected to only the antenna interface 3 and the antenna interface 4. Therefore, the network architecture is a single-connectivity dynamic network.

When the crossover J81 is switched to a bridge mode and the switch K81 is turned on, radio frequency signals output by the radio frequency interface A and the radio frequency interface B flow to the bridge D81, and flow to the power splitter G82 through the power splitter G81.

In this case, a radio frequency channel of the radio frequency interface A may be connected to the antenna interfaces 1 to 4, and a radio frequency channel of the radio frequency interface B may be connected to the antenna interfaces 1 to 4. Therefore, the network architecture is a multi-connectivity dynamic network. When the feed network works in a multi-connectivity state, one of the radio frequency interfaces A and B does not send a signal, the other sends a signal, and a signal channel of the radio frequency interface that sends a signal may be connected to the antenna interfaces 1 to 4, to implement beam forming for a maximum of antennas and implement an energy saving state.

It should be understood that, in the network architecture provided in this technical solution, turn-on and turn-off of a switching device and a straight-through mode or a bridge mode of a crossover may be controlled to form another signal channel, to implement a single-connectivity or multi-connectivity dynamic network architecture.

### Embodiment 4

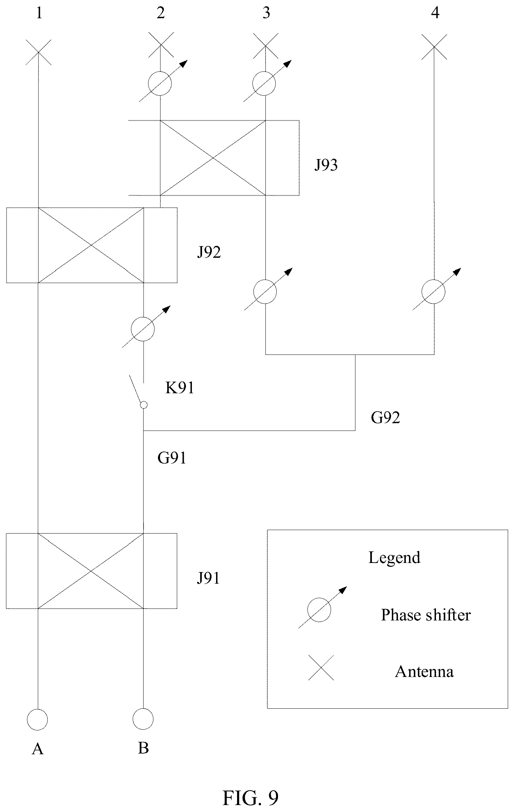

FIG. 9 is a schematic of a topology of an architecture of another feed network according to an embodiment of this application. As shown in FIG. 9, the architecture of the feed network includes a crossover J91, a crossover J92, a crossover J93, a power splitter G91, a power splitter G92, a switch K91, and a plurality of phase shifters. A radio frequency interface A and a radio frequency interface B are respectively connected to input ends of the crossover J91. Output ends of the crossover J91 are respectively connected to the crossover J92 and the power splitter G91. One output end of the power splitter G91 is connected to the switch K91, and the other output end of the power splitter G91 is connected to the power splitter G92. The switch K91 is connected to an input end of the crossover J92 through one phase shifter. One output end of the power splitter G92 is connected to the crossover J93 through a phase shifter, and the other output end of the power splitter G92 is connected to an antenna interface 4 through a phase shifter. One output end of the crossover J92 is connected to an antenna interface 1, and no phase shifter is disposed between the output end and the antenna interface. A phase of a signal output through the output end is used as a reference phase. The other output end of the crossover J92 is connected to the crossover J93. Two output ends of the crossover J93 are respectively connected to an antenna interface 2 and an antenna interface 3 through phase shifters.

When the crossover J91 is switched to a straight-through mode and the switch K91 is turned off, a radio frequency signal output by the radio frequency interface A cannot flow to the power splitter G91, but directly flows to the crossover J92. If the crossover J92 is switched to a bridge mode, the radio frequency signal output by the radio frequency interface A flows to the antenna interface 1 and the crossover J93. If the crossover J93 is switched to a straight-through mode, the radio frequency signal output by the radio frequency interface A further flows to the antenna interface 2 instead of the antenna interface 3, and a radio frequency signal output by the radio frequency interface B flows to the power splitter G91 through the crossover J91. Further, because the switch K91 is turned off, the radio frequency signal flows to the crossover J93 and the antenna interface 4 through the power splitter G92. In addition, because the crossover J93 is in the straight-through mode, the radio frequency signal further flows to the antenna interface 3.

In this case, a radio frequency channel of the radio frequency interface A can be connected to only the antenna interface 1 and the antenna interface 2, and a radio frequency channel of the radio frequency interface B can be connected to only the antenna interface 3 and the antenna interface 4. Therefore, the network architecture is a single-connectivity dynamic network.

When the crossover J91, the crossover J92, and the crossover J93 are switched to a bridge mode and the switch K91 is turned on, radio frequency signals output by the radio frequency interface A and the radio frequency interface B flow to the crossover J92, flow to the power splitter G92 through the power splitter G91, and flow to the crossover J93 through the power splitter G92.

In this case, a radio frequency channel of the radio frequency interface A may be connected to the antenna interfaces 1 to 4, and a radio frequency channel of the radio frequency interface B may be connected to the antenna interfaces 1 to 4. Therefore, the network architecture is a multi-connectivity dynamic network. When the feed network works in a multi-connectivity state, one of the radio frequency interfaces A and B does not send a signal, the other sends a signal, and a signal channel of the radio frequency interface that sends a signal may be connected to the antenna interfaces 1 to 4, to implement beam forming for a maximum of antennas and implement an energy saving state.

It should be understood that, in the network architecture provided in this technical solution, turn-on and turn-off of a switching device and a straight-through mode or a bridge mode of a crossover may be controlled to form another signal channel, to implement a single-connectivity or multi-connectivity dynamic network architecture.

### Embodiment 5

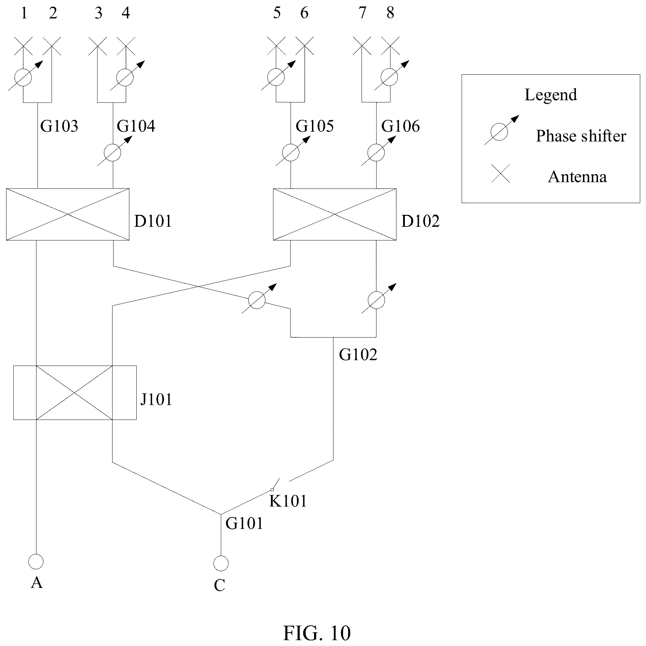

FIG. 10 is a schematic of a topology of an architecture of another feed network according to an embodiment of this application. As shown in FIG. 10, the architecture of the feed network includes a bridge D101, a bridge D102, a power splitter G101, a power splitter G102, a power splitter G103, a power splitter G104, a power splitter G105, a power splitter G106, a switch K101, a crossover J101, and a plurality of phase shifters. A radio frequency interface A is connected to the crossover J101. A radio frequency interface C is connected to an input end of the power splitter G101. Output ends of the power splitter G101 are respectively connected to the crossover J101 and the switch K101. The switch K101 is connected to an input end of the power splitter G102. Output ends of the power splitter G102 are respectively connected to the bridge D101 and the bridge D102 through phase shifters. One output end of the bridge D101 is connected to the power splitter G103, and no phase shifter is disposed between the output end and the power splitter. A phase of a signal output through the output end is used as a reference phase. The other output end of the bridge D101 is connected to the power splitter G104 through a phase shifter. Two output ends of the bridge D102 are respectively connected to the power splitter G105 and the power splitter G106 through phase shifters. One output end of the power splitter G103 is connected to an antenna interface 1 through a phase shifter, and the other output end of the power splitter G103 is directly connected to an antenna interface 2. One output end of the power splitter G104 is connected to an antenna interface 4 through a phase shifter, and the other output end of the power splitter G104 is directly connected to an antenna interface 3. One output end of the power splitter G105 is connected to an antenna interface 5 through a phase shifter, and the other output end of the power splitter G105 is directly connected to an antenna interface 6. One output end of the power splitter G106 is connected to an antenna interface 8 through a phase shifter, and the other output end of the power splitter G106 is directly connected to an antenna interface 7.

When the switch K101 is turned off, a radio frequency signal output by the radio frequency interface C cannot flow to the power splitter G102 through the power splitter G101, but flows to the crossover J101. Further, if the crossover J101 is switched to a straight-through mode, the radio frequency signal from the radio frequency interface A flows to the bridge D101, and a radio frequency signal from the power splitter G101 flows to the bridge D102.

In this case, a radio frequency channel of the radio frequency interface A may be connected to the antenna interfaces 1 to 4, and a radio frequency channel of the radio frequency interface C may be connected to the antenna interfaces 5 to 8. Therefore, the network architecture is a single-connectivity dynamic network.

When the switch K101 is turned on, a radio frequency signal output by the radio frequency interface C flows to the power splitter G102 through the power splitter G101 and flows to the crossover J101. Further, if the crossover J101 is switched to a bridge mode, the radio frequency signal from the radio frequency interface A flows to the bridge D101 and the bridge D102, and a radio frequency signal from the power splitter G101 flows to the bridge D101 and the bridge D102.

In this case, a radio frequency channel of the radio frequency interface A may be connected to the antenna interfaces 1 to 8, and a radio frequency channel of the radio frequency interface C may be connected to the antenna interfaces 1 to 8. Therefore, the network architecture is a multi-connectivity dynamic network. When the feed network works in a multi-connectivity state, one of the radio frequency interfaces A and C does not send a signal, the other sends a signal, and a signal channel of the radio frequency interface that sends a signal may be connected to the antenna interfaces 1 to 8, to implement beam forming for a maximum of antennas and implement an energy saving state.

It should be understood that, in the network architecture provided in this technical solution, turn-on and turn-off of a switching device and a straight-through mode or a bridge mode of a crossover may be controlled to form another signal channel, to implement a single-connectivity or multi-connectivity dynamic network architecture.

### Embodiment 6

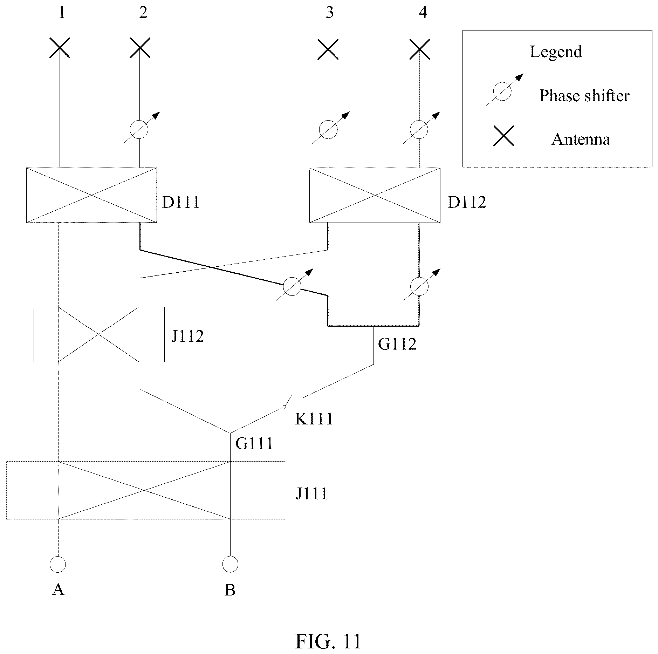

FIG. 11 is a schematic of a topology of an architecture of another feed network according to an embodiment of this application. As shown in FIG. 11, the architecture of the feed network includes a bridge D111, a bridge D112, a power splitter G111, a power splitter G112, a switch K111, a crossover J111, a crossover J112, and a plurality of phase shifters. A radio frequency interface A and a radio frequency interface B are connected to the crossover J111. The crossover J111 is connected to an input end of the crossover J112 and an input end of the power splitter G111. Output ends of the power splitter G111 are respectively connected to the crossover J112 and the switch K111. One output end of the power splitter G111 is connected to the crossover J112, and the other output end of the power splitter G111 is connected to the switch K111. The switch K111 is connected to an input end of the power splitter G112. Two output ends of the power splitter G112 are respectively connected to the bridge D111 and the bridge D112 through phase shifters. Two output ends of the crossover J112 are respectively connected to the bridge D111 and the bridge D112. One output end of the bridge D111 is connected to an antenna interface 1, and no phase shifter is disposed between the output end and the antenna interface. A phase of a signal output through the output end is used as a reference phase. The other output end of the bridge D111 is connected to an antenna interface 2 through a phase shifter. Two output ends of the bridge D112 are connected to an antenna interface 3 and an antenna interface 4 through phase shifters.

When the switch K111 is turned off and the crossover J111 is switched to a straight-through mode, a radio frequency signal output by the radio frequency interface B cannot flow to the power splitter G112 through the power splitter G111, but flows to the crossover J112. Further, if the crossover J112 is switched to a straight-through mode, a radio frequency signal from the radio frequency interface A flows to the bridge D111, and the radio frequency signal from the radio frequency interface B flows to the bridge D112.

In this case, a radio frequency channel of the radio frequency interface A can be connected to only the antenna interface 1 and the antenna interface 2, and a radio frequency channel of the radio frequency interface B can be connected to only the antenna interface 3 and the antenna interface 4. Therefore, the network architecture is a single-connectivity dynamic network.

When the switch K111 is turned on and the crossover J111 is switched to a bridge mode, a radio frequency signal output by the radio frequency interface B flows to the power splitter G111 and the crossover J112 through the crossover J111. Further, if the crossover J112 is switched to a bridge mode, a radio frequency signal from the radio frequency interface A flows to the bridge D111 and the bridge D112 through the crossover J111 and the crossover J112. In addition, a part of the radio frequency signal input by the power splitter G111 flows to the bridge D111 and the bridge D112 through the crossover J112, and another part of the radio frequency signal flows to the bridge D111 and the bridge D112 through the power splitter G112.

In this case, a radio frequency channel of the radio frequency interface A may be connected to the antenna interfaces 1 to 4, and a radio frequency channel of the radio frequency interface B may be connected to the antenna interfaces 1 to 4. Therefore, the network architecture is a multi-connectivity dynamic network. When the feed network works in a multi-connectivity state, one of the radio frequency interfaces A and B does not send a signal, the other sends a signal, and a signal channel of the radio frequency interface that sends a signal may be connected to the antenna interfaces 1 to 4, to implement beam forming for a maximum of antennas and implement an energy saving state.

It should be understood that, in the network architecture provided in this technical solution, turn-on and turn-off of a switching device and a straight-through mode or a bridge mode of a crossover may be controlled to form another signal channel, to implement a single-connectivity or multi-connectivity dynamic network architecture.

### Embodiment 7

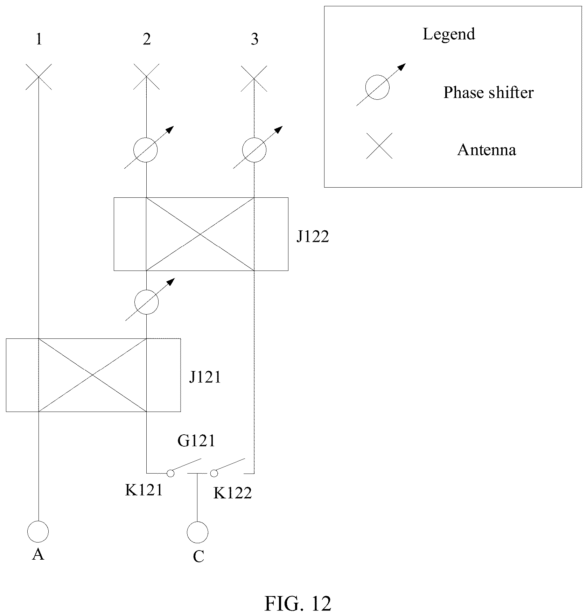

FIG. 12 is a schematic of a topology of an architecture of another feed network according to an embodiment of this application. As shown in FIG. 12, the architecture of the feed network includes a power splitter G121, a switch K121, a switch K122, a crossover J121, a crossover J122, and a plurality of phase shifters. A radio frequency interface A is connected to the crossover J121. One output end of the crossover J121 is directly connected to an antenna interface 1, and no phase shifter is disposed between the output end and the antenna interface. A phase of a signal output through the output end is used as a reference phase. The other output end of the crossover J121 is connected to the crossover J122 through a phase shifter. A radio frequency interface C is connected to the power splitter G121. One output end of the power splitter G121 is connected to the crossover J121 through the switch K121, and the other output end of the power splitter G121 is connected to the crossover J122 through the switch K122. Two output ends of the crossover J122 are connected to an antenna interface 2 and an antenna interface 3 through phase shifters.

When the switch K121 and the switch K122 are both turned on and the crossover J121 is switched to a straight-through mode, a radio frequency signal output by the radio frequency interface A is output to an antenna interface 1 through the crossover J121, and a radio frequency signal output by the radio frequency interface C is diverged to the crossover J122 through the power splitter G121.

In this case, a radio frequency channel of the radio frequency interface A may be connected to the antenna interface 1, and a radio frequency channel of the radio frequency interface C may be connected to the antenna interface 2 and the antenna interface 3. Therefore, the network architecture is a single-connectivity dynamic network.

When the switch K121 and the switch K122 are both turned on and the crossover J121 is switched to a bridge mode, a radio frequency signal output by the radio frequency interface A is output to the antenna interface 1 and the crossover J122 through the crossover J121, and a radio frequency signal output by the radio frequency interface C is diverged to the crossover J121 and the crossover J122 through the power splitter G121. Further, the crossover J121 outputs, to the antenna interface 1 and the crossover J122, the radio frequency signal output by the radio frequency interface C. If the crossover J122 is switched to a bridge mode, the signal input by the crossover J122 may be output to the antenna interface 2 and the antenna interface 3.

In this case, a radio frequency channel of the radio frequency interface A may be connected to the antenna interfaces 1 to 3, and a radio frequency channel of the radio frequency interface C may be connected to the antenna interfaces 1 to 3. Therefore, the network architecture is a multi-connectivity dynamic network. When the feed network works in a multi-connectivity state, one of the radio frequency interfaces A and C does not send a signal, the other sends a signal, and a signal channel of the radio frequency interface that sends a signal may be connected to the antenna interfaces 1 to 3, to implement beam forming for a maximum of antennas and implement an energy saving state.

It should be understood that, in the network architecture provided in this technical solution, turn-on and turn-off of a switching device and a straight-through mode or a bridge mode of a crossover may be controlled to form another signal channel, to implement a single-connectivity or multi-connectivity dynamic network architecture.

### Embodiment 8

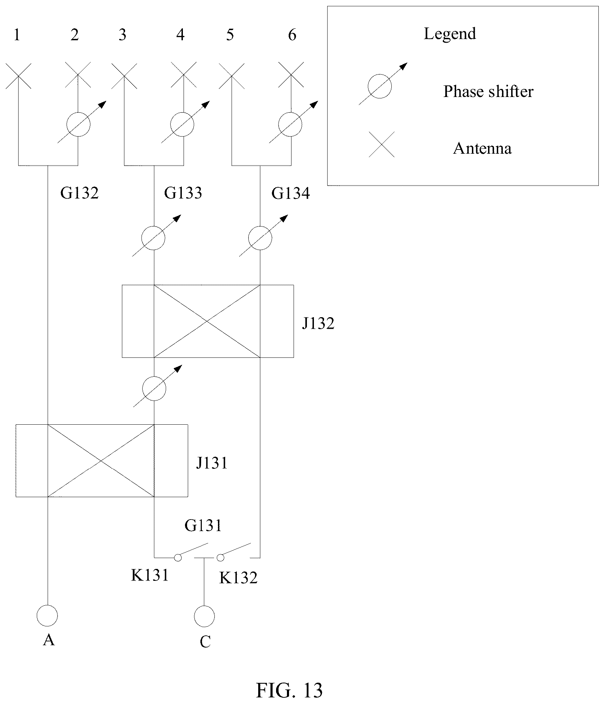

FIG. 13 is a schematic of a topology of an architecture of another feed network according to an embodiment of this application. As shown in FIG. 13, the architecture of the feed network includes a power splitter G131, a power splitter G132, a power splitter G133, a power splitter G134, a switch K131, a switch K132, a crossover J131, a crossover J132, and a plurality of phase shifters. A radio frequency interface A is connected to the crossover J131. One output end of the crossover J131 is connected to an antenna interface 1 and an antenna interface 2 through the power splitter G132, and the other output end of the crossover J131 is connected to the crossover J132 through a phase shifter. A radio frequency interface C is connected to the power splitter G131. One output end of the power splitter G131 is connected to the crossover J131 through the switch K131, and the other output end of the power splitter G131 is connected to the crossover J132 through the switch K132. Two output ends of the crossover J132 are connected to antenna interfaces 3 to 6 through phase shifters, the power splitter G133, and the power splitter G134.

When the switch K131 and the switch K132 are both turned on and the crossover J131 is switched to a straight-through mode, a radio frequency signal output by the radio frequency interface A is output to the antenna interface 1 and the antenna interface 2 through the crossover J131, and a radio frequency signal output by the radio frequency interface C is diverged to the crossover J132 through the power splitter G131.

In this case, a radio frequency channel of the radio frequency interface A may be connected to the antenna interface 1 and the antenna interface 2, and a radio frequency channel of the radio frequency interface C may be connected to the antenna interfaces 3 to 6. Therefore, the network architecture is a single-connectivity dynamic network.

When the switch K131 and the switch K132 are both turned on and the crossover J131 is switched to a bridge mode, a radio frequency signal output by the radio frequency interface A is output to the antenna interface 1 and the crossover J132 through the crossover J131, and a radio frequency signal output by the radio frequency interface C is diverged to the crossover J131 and the crossover J132 through the power splitter G131. Further, the crossover J131 outputs, to the antenna interface 1, the antenna interface 2, and the crossover J132, the radio frequency signal output by the radio frequency interface C. If the crossover J132 is switched to a bridge mode, the signal input by the crossover J132 may be output to the antenna interfaces 3 to 6.

In this case, a radio frequency channel of the radio frequency interface A may be connected to the antenna interfaces 1 to 6, and a radio frequency channel of the radio frequency interface C may be connected to the antenna interfaces 1 to 6. Therefore, the network architecture is a multi-connectivity dynamic network. When the feed network works in a multi-connectivity state, one of the radio frequency interfaces A and C does not send a signal, the other sends a signal, and a signal channel of the radio frequency interface that sends a signal may be connected to the antenna interfaces 1 to 6, to implement beam forming for a maximum of antennas and implement an energy saving state.

It should be understood that, in the network architecture provided in this technical solution, turn-on and turn-off of a switching device and a straight-through mode or a bridge mode of a crossover may be controlled to form another signal channel, to implement a single-connectivity or multi-connectivity dynamic network architecture.

### Embodiment 9

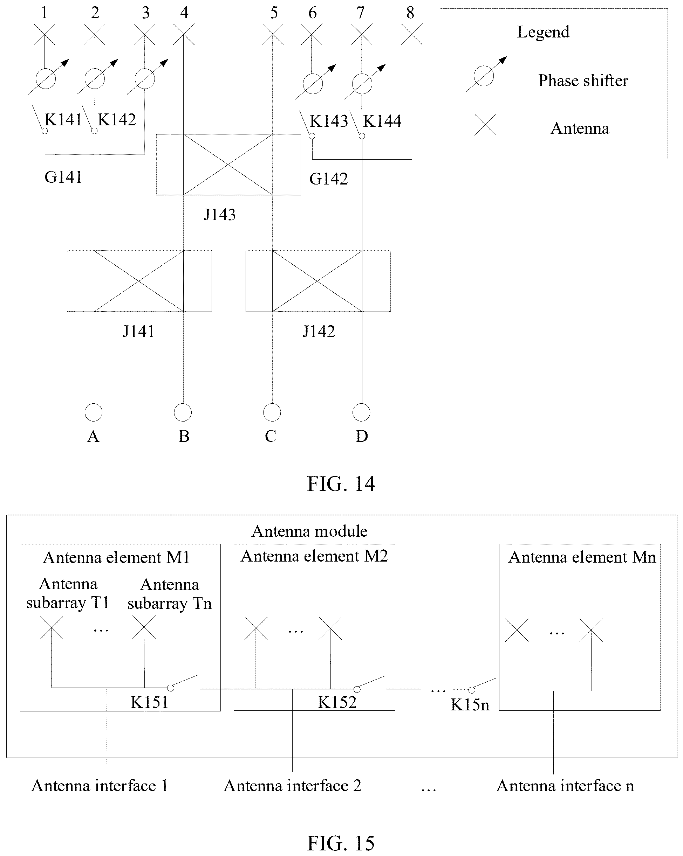

FIG. 14 is a schematic of a topology of an architecture of another feed network according to an embodiment of this application. As shown in FIG. 14, the architecture of the feed network includes a power splitter G141, a power splitter G142, a switch K141, a switch K142, a switch K143, a switch K144, a crossover J141, a crossover J142, a crossover J143, and a plurality of phase shifters. A radio frequency interface A and a radio frequency interface B are connected to the crossover J141. One output end of the crossover J141 is connected to antenna interfaces 1 to 3 through the power splitter G141, the switch K141, the switch K142, and a plurality of phase shifters, and the other output end of the crossover J141 is connected to the crossover J143. A radio frequency interface C and a radio frequency interface D are connected to the crossover J142. One output end of the crossover J142 is connected to antenna interfaces 6 to 8 through the power splitter G142, the switch K143, the switch K144, and a multiple phase shifters, and the other output end of the crossover J142 is connected to the crossover J143. Two output ends of the crossover J143 are respectively connected to antenna interface 4 and the antenna interface 5.

When the switch K141 and the switch K142 are both turned on and the crossover J141 is switched to a straight-through mode, a radio frequency signal output by the radio frequency interface A is output to the antenna interfaces 1 to 3 through the crossover J141, and a radio frequency signal output by the radio frequency interface B is output to the crossover J143 through the crossover J141. Further, if the crossover J143 is switched to a straight-through mode, the radio frequency signal output by the radio frequency interface B is output to an antenna interface 4 through the crossover J143. Similarly, when the switch K143 and the switch K144 are both turned on and the crossover J142 is switched to a straight-through mode, a radio frequency signal output by the radio frequency interface D is output to the antenna interfaces 6 to 8 through the crossover J142, and a radio frequency signal output by the radio frequency interface C is output to the crossover J143 through the crossover J142, and is output to the antenna interface 5 through the crossover J143.

In this case, a radio frequency channel of the radio frequency interface A may be connected to the antenna interfaces 1 to 3, a radio frequency channel of the radio frequency interface B may be connected to the antenna interface 4, a radio frequency channel of the radio frequency interface C may be connected to the antenna interface 5, and a radio frequency channel of the radio frequency interface D may be connected to the antenna interfaces 6 to 8. Therefore, the network architecture is a single-connectivity dynamic network.

When the switches K141 to K144 are turned on and the crossovers J141 to J143 are switched to a bridge mode, radio frequency signals output by the radio frequency interfaces A and B are output to the antenna interfaces 1 to 5 through the crossover J141 and the crossover J143, and radio frequency signals output by the radio frequency interfaces C and D are output to the antenna interfaces 4 to 8 through the crossover J142 and the crossover J143.

In this case, a radio frequency channel of the radio frequency interface A may be connected to the antenna interfaces 1 to 5, a radio frequency channel of the radio frequency interface B may be connected to the antenna interfaces 1 to 5, a radio frequency channel of the radio frequency interface C may be connected to the antenna interfaces 4 to 8, and a radio frequency channel of the radio frequency interface D may be connected to the antenna interfaces 4 to 8. Therefore, the network architecture is a multi-connectivity dynamic network. When the feed network works in a multi-connectivity state, one of the radio frequency interfaces A to D sends a signal, the others do not send a signal, and a signal channel of the radio frequency interface that sends a signal may be connected to a plurality of antenna interfaces, to implement beam forming for a maximum of antennas and implement an energy saving state.

It should be understood that, in the network architecture provided in this technical solution, turn-on and turn-off of a switching device and a straight-through mode or a bridge mode of a crossover may be controlled to form another signal channel, to implement a single-connectivity or multi-connectivity dynamic network architecture.

Based on a same technical concept, an embodiment of this application further provides an antenna module, used in the feed network provided in embodiments of this application. As shown in FIG. 15, the antenna module includes a plurality of antenna elements (shown as antenna elements M1 to Mn in FIG. 15), each antenna element is connected to one antenna interface (shown as antenna interfaces 1 to n in FIG. 15), and the antenna element includes at least one antenna subarray (shown as antenna subarrays T1 to Tn in FIG. 15). The antenna module further includes a plurality of third switches (shown as K151 to K15n in FIG. 15), and one third switch is connected between any two adjacent antenna elements.

In a possible implementation, when the third switch K151 is turned on and the third switch K152 is turned off, the antenna interface 1 may output a radio frequency signal to each antenna subarray in the antenna element M1 and the antenna element M2.

For another example, when the third switches K151 to K15n are turned on, the antenna interface 1 may output a radio frequency signal to each antenna subarray in each antenna element.

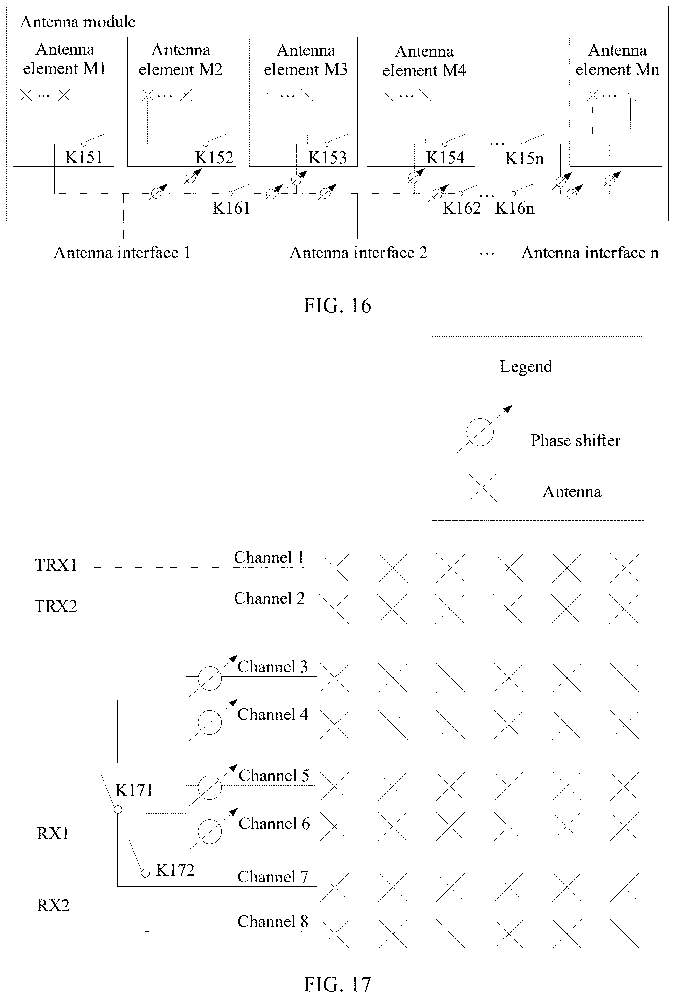

Further, on the basis of the structure of the antenna module in FIG. 15, as shown in FIG. 16, the antenna module further includes switches K161 to K16n and a plurality of phase shifters. Each antenna interface is connected to two antenna elements through a microstrip, and one switch is disposed every two antenna elements (shown as K161 to K16n in FIG. 16).

In a possible implementation, when the switch K161 is turned on, the switches K162 to K16n are turned off, and the third switches K151 to K15n are also turned off, the antenna interface 1 may output a radio frequency signal to each antenna subarray in the antenna elements M1 to M4.

For another example, when the switches K161 to K16n are turned on, the antenna interface 1 may output a radio frequency signal to each antenna subarray in each antenna element.

Based on the antenna modules shown in FIG. 15 and FIG. 16, any quantity of antenna elements can receive a same radio frequency signal. Compared with a current design in which antenna elements are independent of each other, this solution further improves flexibility of a network architecture, and implements a multi-connectivity dynamic network architecture. In addition, this solution implements dynamic, real-time and fast switching of a network architecture under different service loads, thereby improving performance of a wireless network at low hardware costs.

It should be understood that, based on a same technical concept, the structure of the antenna module may be further divided. For example, an internal structure of the antenna module is refined by adding a connection line and a switching device in a horizontal or vertical direction, to implement fast and unified allocation of a radio frequency signal. Details are not described herein again.

Based on a same technical concept, this application further provides an antenna device, including a feed network and an antenna module.

In a possible implementation, FIG. 17 is a diagram of an architecture of an antenna network according to an embodiment of this application. As shown in FIG. 17, the architecture of the antenna network in this technical solution includes a switch K171, a switch K172, radio frequency interfaces TRX1 and TRX2 that support signal transmission and signal reception, and radio frequency interfaces RX1 and RX2 that support signal reception.

When the switch K171 is turned off, a signal from the RX1 flows to an antenna connected to a channel 7; and when the switch K172 is turned off, a signal from the RX2 flows to an antenna connected to a channel 8. In this case, because each channel is not connected to a phase shifter, the signal is degraded to a digital beam forming state. When the switch K171 is turned on, a signal from the RX1 simultaneously flows to antennas connected to channels 3, 4, and 7; and when the switch K172 is turned on, a signal from the RX2 simultaneously flows to antennas connected to channels 5, 6, and 8. In this way, the network architecture works in a hybrid beam forming state.

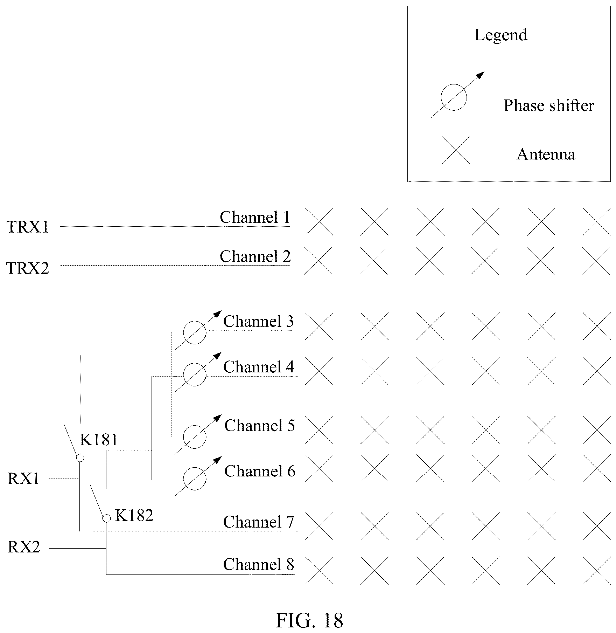

In a possible implementation, FIG. 18 is a diagram of an architecture of another antenna network according to an embodiment of this application. As shown in FIG. 18, the architecture of the antenna network in this technical solution includes a switch K181, a switch K182, radio frequency interfaces TRX1 and TRX2 that support signal transmission and signal reception, and radio frequency interfaces RX1 and RX2 that support signal reception.

When the switch K181 is turned off, a signal from the RX1 flows to an antenna connected to a channel 7; and when the switch K182 is turned off, a signal from the RX2 flows to an antenna connected to a channel 8. In this case, because each channel is not connected to a phase shifter, the signal is degraded to a digital beam forming state. When the switch K181 is turned on, a signal from the RX1 simultaneously flows to antennas connected to channels 3, 5, and 7; and when the switch K182 is turned on, a signal from the RX2 simultaneously flows to antennas connected to channels 4, 6, and 8. In this way, the network architecture works in a hybrid beam forming state.

The foregoing technical solutions implement real-time and fast switching of a network architecture under different service loads, improve performance of a wireless network at low hardware costs, and are applied to a variety of communication services and application scenarios.

It is clear that a person skilled in the art may make various modifications and variations to this application without departing from the protection scope of this application, for example, adding a radio frequency interface, an antenna interface, and a quantity of other components. This application is intended to cover these modifications and variations of this application provided that they fall within the protection scope defined by the following claims and their equivalent technologies.

## Claims

1. A feed network, wherein the feed network comprises a first radio frequency interface, a first selection unit, at least one allocation unit, at least one phase shift unit, and a plurality of antenna interfaces;
an input end of the first selection unit is connected to the first radio frequency interface, an output end of the first selection unit is connected to the at least one allocation unit, and each allocation unit is connected to at least two antenna interfaces in the plurality of antenna interfaces through one phase shift unit;
the first selection unit is configured to: receive a first radio frequency signal from the first radio frequency interface, and transmit the received first radio frequency signal to the at least one allocation unit;
the phase shift unit is configured to adjust an amplitude and a phase of the received first radio frequency signal; and
the allocation unit is configured to allocate the adjusted first radio frequency signal to the antenna interface connected to the allocation unit.

2. The feed network according to claim 1, wherein the feed network further comprises a second radio frequency interface;
the input end of the first selection unit is connected to the second radio frequency interface;
the first selection unit is further configured to: receive a second radio frequency signal from the second radio frequency interface, and transmit the received second radio frequency signal to the at least one allocation unit;
the phase shift unit is further configured to adjust an amplitude and a phase of the received second radio frequency signal; and
the allocation unit is further configured to allocate the adjusted second radio frequency signal to the antenna interface connected to the allocation unit.

3. The feed network according to claim 1, wherein the feed network further comprises a third radio frequency interface and a second selection unit;
an input end of the second selection unit is connected to the third radio frequency interface, and an output end of the second selection unit is connected to the input end of the first selection unit and the at least one allocation unit;
the second selection unit is configured to: receive a third radio frequency signal from the third radio frequency interface, and transmit the received third radio frequency signal to the first selection unit and/or the allocation unit connected to the second selection unit;
the phase shift unit is further configured to adjust an amplitude and a phase of the received third radio frequency signal; and
the allocation unit is further configured to allocate the adjusted third radio frequency signal to the antenna interface connected to the allocation unit.

4. The feed network according to claim 3, wherein the first selection unit and/or the second selection unit are/is a crossover; or
the first selection unit and/or the second selection unit are/is a bridge.

5. The feed network according to claim 1 or 2, wherein the first selection unit comprises a first power splitter and a first switch, an input end of the first power splitter is used as the input end of the first selection unit, a first output end of the first power splitter is connected to a first end of the first switch, and a second output end of the first power splitter and a second end of the first switch are used as output ends of the first selection unit; or
the first selection unit comprises the first power splitter and two first switches, the input end of the first power splitter is used as the input end of the first selection unit, the first output end and the second output end of the first power splitter are respectively connected to first ends of the two first switches, and second ends of the two first switches are used as output ends of the first selection unit.

6. The feed network according to claim 3 or 4, wherein the second selection unit comprises a second power splitter and a second switch, an input end of the second power splitter is used as the input end of the second selection unit, a first output end of the second power splitter is connected to a first end of the second switch, and a second output end of the second power splitter and a second end of the second switch are used as output ends of the second selection unit; or
the second selection unit comprises the second power splitter and two second switches, the input end of the second power splitter is used as the input end of the second selection unit, the first output end and the second output end of the second power splitter are respectively connected to first ends of the two second switches, and second ends of the two second switches are used as output ends of the first selection unit.

7. The feed network according to any one of claims 1 to 6, wherein the allocation unit is one of a bridge, a crossover, and a power splitter.

8. An antenna module, used in the feed network according to any one of claims 1 to 7, wherein the antenna module comprises a plurality of antenna elements, each antenna element is connected to one antenna interface, and the antenna element comprises at least one antenna subarray.

9. The antenna module according to claim 8, wherein the antenna module further comprises a plurality of third switches, and the third switch is connected between any two adjacent antenna elements.

10. An antenna device, comprising at least one feed network according to any one of claims 1 to 7 and at least one antenna module according to claim 8 or 9.
